Europäisches Patentamt

European Patent Office

Office européen des brevets

(11) Publication number: **0 311 463**

**A2**

# EUROPEAN PATENT APPLICATION

(21) Application number: 88309460.9

(22) Date of filing: 10.10.88

(51) Int. Cl.4: **G 11 B 7/13**
**G 11 B 7/135**

(30) Priority: 09.10.87 JP 255587/87

(43) Date of publication of application:
**12.04.89 Bulletin 89/15**

(84) Designated Contracting States: **DE FR GB IT NL**

(71) Applicant: **SHARP KABUSHIKI KAISHA**
**22-22 Nagaike-cho Abeno-ku**
**Osaka 545 (JP)**

(72) Inventor: **Yoshida, Yoshio**
**2613-1 Ichinomoto-cho**
**Tenri-shi Nara-ken (JP)**

**Nagahama, Toshiya**
**2613-1 Ichinomoto-cho**
**Tenri-shi Nara-ken (JP)**

**Kubo, Katuhiro**
**87-11 Wakatsuki-cho**
**Yamatokoriyama-shi Nara-ken (JP)**

**Kurata, Yukio**
**148-1 Kidono-cho**
**Tenri-shi Nara-ken (JP)**

(74) Representative: **Jones, Colin et al**
**W.P. THOMPSON & CO. Coopers Building Church Street**
**Liverpool L1 3AB (GB)**

(54) **An optical information reproducing apparatus.**

(57) An optical information-reproducing apparatus comprising a light emitting means, and an optical system that focuses light emitted from the light emitting means on a recording medium and that detects the reflected light from the recording medium to supply to a diffracting element, and a photodetector that includes a plurality of photodetecting portions divided by division lines and that converts the diffracted light from the diffracting element focussed on the division lines into an electrical signal by the photodetecting portions on both sides of the division lines, wherein the photodetector is so constructed that division lines on which diffracted light from the diffracting element is focused are inclined with respect to the direction of the diffraction of the reflected light in the diffracting element such that the amount of focusing spot light received by the photodetecting portions on both sides of the division lines become substantially equal.

Fig. 1

EP 0 311 463 A2

## Description

## AN OPTICAL INFORMATION-REPRODUCING APPARATUS

1. Field of the invention:

The present invention relates to an optical information-reproducing apparatus such as a compact disc reproducing apparatus and the like having an optical pickup with a focus detecting mechanism.

2. Description of the prior art:

Optical information-reproducing apparatuses such as a compact disc reproducing apparatus and the like are provided with a optical pickup. For the purpose of improving the performance of the system, it has been an essential problem to develop a small and lightweight optical pickup. To solve this problem, it has been found most effective to use a diffracting element in an optical system of the optical pickup and several configurations have been proposed hitherto.

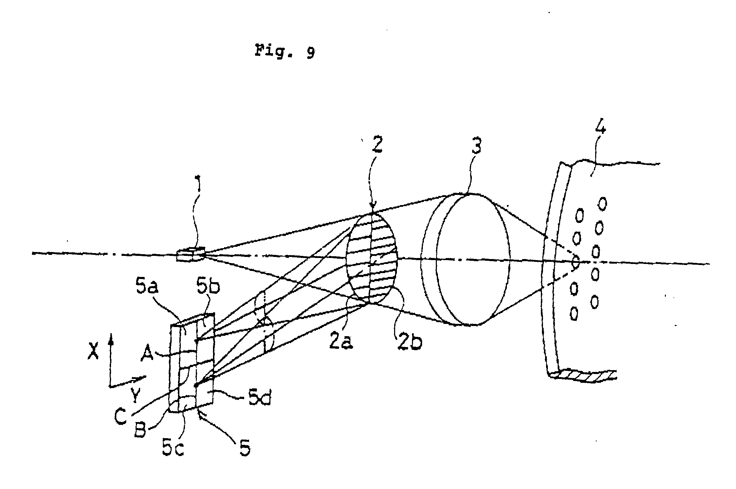

In such conventional optical information-reproducing apparatus, for example, as shown in Figure 9, light emitted from a semiconductor laser 1 penetrates through a diffracting element 2 and is focused on a disc 4, the recording medium, by a convergent lens 3, and the reflected light from the disc 4 is returned to the optical system by the convergent lens 3 and diffracted onto a photodetector 5 by the diffracting element 2. In this apparatus, since the focusing spot formed on disc 4 is so small in diameter (about 1 μm) that, a so-called focus detecting mechanism constituted by the diffracting element 2, the photodetector 5 and so on is indispensable.

The diffracting element 2 takes a generally circular form divided equally into two semicircular regions 2a and 2b. The photodetector 5 takes a square form and includes four photodetecting portions 5a, 5b, 5c, and 5d that are delineated by division lines A and B in the direction of the X-axis which is the direction of diffracting in the diffracting element 2, and division line C in the direction of the Y-axis which is orthogonal to the X-axis. It is so designed that the diffracted light in one region 2a of the diffracting element 2 is focused on the division line A which divides the photodetector 5 into the photodetecting portions 5a and 5b, and the diffracted light from the other region 2b is focused on the division line B which divides the photodetector 5 into the photodetection portions 5c and 5d.

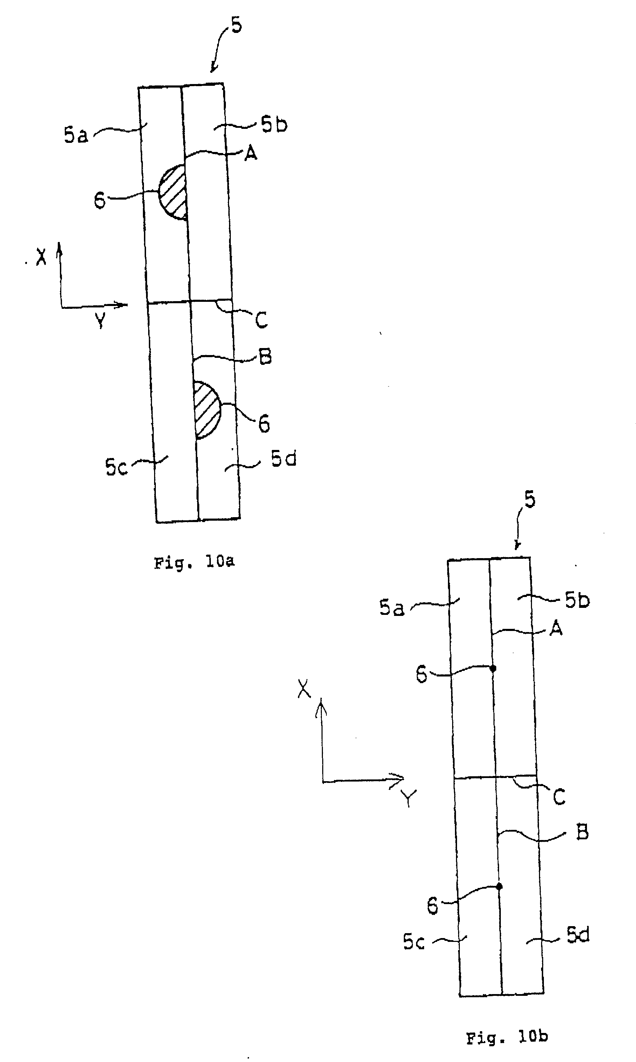

In such a configuration, when light irradiated from the semiconductor laser 1 is precisely focused on the disc 4 by the convergent lens 3 or at the correct focus, as shown in Figure 10b, focusing spots 6 of the diffracted light from the diffracting element 2 are formed at one point on each of the division lines A and B, and outputs of the photodetecting portions 5a and 5b as well as those of the photodetecting portions 5c and 5d become equal. When the disc 4 moves too close to the convergent lens 3 for some reason or other, the focus of the diffracted light is formed behind the photodetector 5, as shown in Figure 10a, and the focusing spots 6 spread in a semicircular pattern in the photodetecting portions 5a and 5b. When the disc 4 is kept at a distance greater than the focal length of the convergent lens 3, the focus of the diffracted light from the diffracting element 2 is formed in front of the photodetector 5, so that, as shown in Figure 10c, the focusing spots 6 spread in a semicircular pattern in the photodetecting portions 5b and 5c.

Thus, when output signals of the photodetecting portions 5a, 5b, 5c, and 5d are represented respectively as Sa, Sb, Sc, and Sd, a focus error signal FES is obtained by calculating the equation FES = (Sa + Sd) - (Sc + Sb), and in response thereto, the convergent lens 3 is driven by a lens driving means, not shown, to suitably adjust the focus on disc 4.

Apart from the aforesaid photodetector 5 in which the photodetecting portions 5c and 5d are aligned continuously with respect to the photodetecting portions Sa and Sb, as disclosed in Japanese Laid-Open Patent Application No. 97141/87, it is well known to form the photodetecting portions 5a and 5b and 5c and 5d as independent photodetectors. In the case of such a configuration, grids of the diffracting element 2 are so formed that the regions 2a and 2b are linearly symmetric with one another, and the two photodetectors are arranged in positions equally spaced from corresponding regions of the diffracting element.

A luminous source such as a laser diode constituting the semiconductor laser 1, however, has characteristics that the wavelength of light emitted from the luminous source changes with variations of ambient temperature. The diffraction angle of the diffracting element 2 and the focus of the diffracted light from the diffracting element 2 on the photodetector 5 depended upon the wavelength of light. Accordingly, the detection of the reflected light from the disc 4 is affected by ambient temperature at which the semiconductor laser 1 is disposed and a proper recording and reproducing of information cannot be precisely performed.

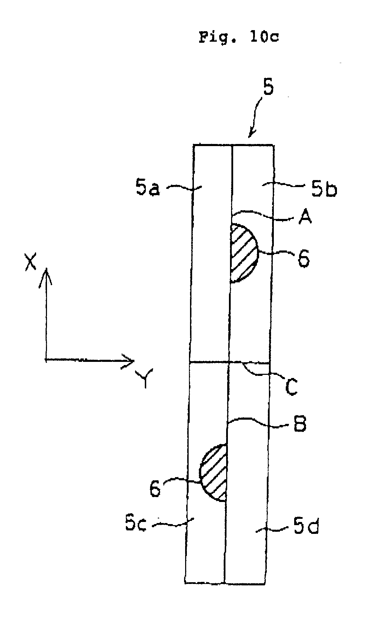

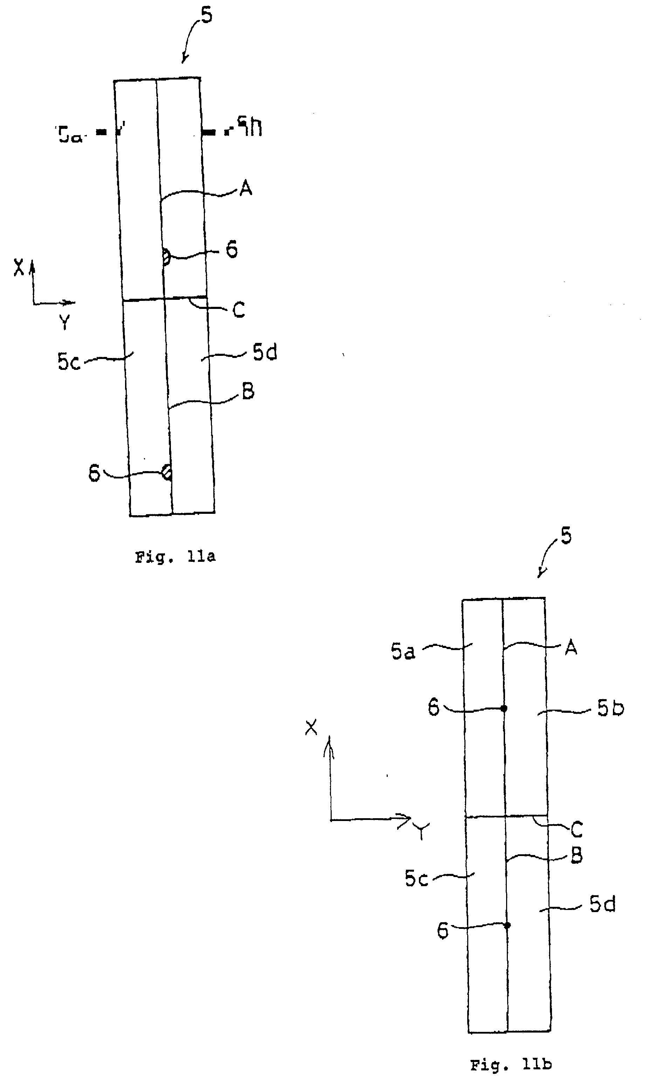

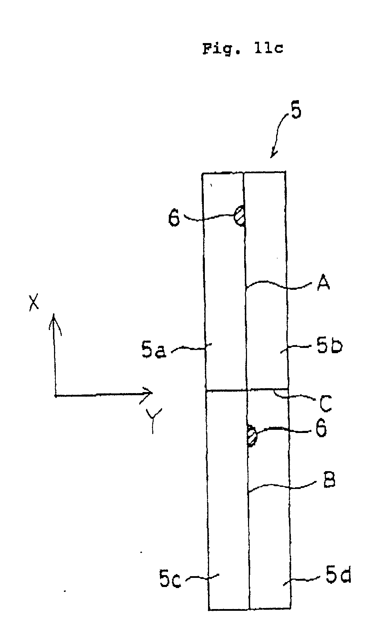

Referring particularly to the aforesaid problem, when the disc 4 is located just at the focal point of the irradiation light from the semiconductor laser 1, and the light wavelength is a standard wavelength $\lambda_0$, as shown in Figure 11b, focusing spots 6 are focussed at one point on the division line A of photodetecting portions 5a and 5b, and at one point on the division line B of photodetecting portions 5c and 5d of the photodetector 5. When ambient temperature at which the semiconductor laser 1 is disposed rises and the light wavelength $\lambda$ becomes larger than $\lambda_0$ (i.e., $\lambda > \lambda_0$) the light diffraction angle of the diffracting element 2 becomes larger and the diffracted light is focused slightly in front of the photodetector 5. Thereby, as shown in Figure 11a, the two focusing spots 6 of the diffracted light move negatively along the X-axis which is the direction of diffraction of the diffracted light, and at the same time, spread in a semicircular shape on the photodetecting portions 5b and 5c. When ambient temperature at which the semiconductor laser 1 is disposed decreases and the light wavelength $\lambda$ becomes smaller than $\lambda_0$ (i.e., $\lambda < \lambda_0$), the light diffraction angle of the diffracting element 2 becomes smaller and the diffracted light is focused slightly behind the photodetector 5. Thereby, as shown in Figure 11c, the two focusing spots 6 of the diffracted light move in a positive direction along the X-axis and at the same time, spread in a semicircular shape on the photodetecting portions 5a and 5d.

Now, since a focus error signal FES is obtained from the equation FES = (Sa + Sd) - (Sc + Sb) as previously described, when the light wavelength is changed as aforementioned, errors are produced in the focus signal that controls the position of the convergent lens 3. That is, when the light wavelength is changed, even when the disc 4 is located at the focal point of the convergent lens 3, the focus error signal FES will not become 0 and a false focus error signal FES will be sent to the lens moving mechanism. Since the false signal produced by the change of wavelength is very large, an aberration of focus occurs, which causes difficulties in recording and reproducing information normally.

## SUMMARY OF THE INVENTION

The optical information-reproducing apparatus of this invention, which overcomes the above-discussed and numerous other disadvantages and deficiencies of the prior art, comprises a light emitting means, and an optical system that focuses light emitted from the light emitting means on a recording medium and that detects the reflected light from said recording medium to supply to a diffracting element, said diffracting element being disposed on an optical axis of the reflected light from said recording medium and having two or more separate regions to diffract the reflected light on the corresponding division lines of a photodetector, and said photodetector including a plurality of photodetecting portions divided by said division lines, and converting the diffracted light from said diffracting element focused on said division lines into an electrical signal by said photodetecting portions on both sides of said division lines, wherein said photodetector is so constructed that division lines on which diffracted light from said diffracting element is focused are inclined with respect to the direction of the diffraction of the reflected light from said diffracting element such that the amount of focusing spot light received by the photodetecting portions on both sides of said division lines become substantially equal.

In a preferred embodiment, the photodetector is divided into a plurality of photodetecting portions by a division line that is orthogonal to the direction of the diffraction of said diffracting element and by division lines that are inclined with respect to the direction of the diffraction of said diffracting element.

In a preferred embodiment, the photodetector is divided into a plurality of photodetecting portions by said division lines such that said photodetecting portions are disposed in parallel in one direction on the same plane.

Thus, the invention described herein makes possible the objective of providing an optical information-reproducing apparatus in which even when the wavelength of light irradiated from a light emitting means has changed, a normal output signal can be obtained from a photodetector, and accordingly a reliable focus servo signal as well as precise information can be obtained, resulting in an improvement in the reliability of the system.

## BRIEF DESCRIPTION OF THE DRAWINGS

This invention may be better understood and its numerous objects and advantages will become apparent to those skilled in the art by reference to the accompanying drawings as follows:

Figure 1 is a perspective view showing an optical information-reproducing apparatus of this invention.

Figure 2 is a front view showing a diffracting element used in this invention.

Figure 3a is a diagram showing the focusing spot formed on the photodetector of Figure 1 when the disc is at a distance which is less than the focal length of the convergent lens.

Figure 3b is a diagram showing the focusing spot formed on the photodetector of Figure 1 when light form a light source is precisely focused on the disc by the convergent lens.

Figure 3c is a diagram showing the focusing spot formed on the photodetector of Figure 1 when the disc is too far from the convergent lens.

Figure 4a is a diagram showing the focusing spot formed on the photodetector of Figure 1 when $\lambda > \lambda_0$.

Figure 4b is a diagram showing the focusing spot formed on the photodetector of Figure 1 when $\lambda = \lambda_0$.

Figure 4c is a diagram showing the focusing spot formed on the photodetector of Figure 1 when $\lambda < \lambda_0$.

Figure 5 is a perspective view showing another optical information-reproducing apparatus of this invention.

Figure 6 is a front view showing another diffracting element of this invention.

Figure 7a is a diagram showing the focusing spot formed on the photodetector of Figure 5 when the disc is too close to the convergent lens.

Figure 7b is a diagram showing the focusing spot formed on the photodetector of Figure 5 when light from a light source is precisely focused on the disc by the convergent lens.

Figure 7c is a diagram showing the focusing spot formed on the photodetector of Figure 5 when the disc is too far from the convergent lens.

Figure 8a is a diagram showing the focusing spot formed on the photodetector of Figure 5

when $\lambda > \lambda_0$.

Figure 8b is a diagram showing the focusing spot formed on the photodetector of Figure 5 when $\lambda = \lambda_0$.

Figure 8c is a diagram showing the focusing spot formed on the photodetector of Figure 5 when $\lambda < \lambda_0$.

Figure 9 is a perspective view showing a conventional optical information-reproducing apparatus.

Figure 10a is a diagram showing the focusing spot formed on the photodetector of Figure 9 when the disc is too close to the convergent lens.

Figure 10b is a diagram showing the focusing spot formed on the photodetector of Figure 9 when light from a light source is precisely focused on the disc by the convergent lens.

Figure 10c is a diagram showing the focusing spot formed on the photodetector of Figure 9 when the disc is too far from the convergent lens.

Figure 11a is a diagram showing the focusing spot formed on the photodetector of Figure 9 when $\lambda > \lambda_0$.

Figure 11b is a diagram showing the focusing spot formed on the photodetector of Figure 9 when $\lambda = \lambda_0$.

Figure 11c is a diagram showing the focusing spot formed on the photodetector of Figure 9 when $\lambda < \lambda_0$.

## DESCRIPTION OF THE PREFERRED EMBODIMENTS

This invention provides an optical information-reproducing apparatus in which the wavelength of light emitted from the light emitting means varies with changes of ambient temperature at which the light emitting means is disposed, so that the diffraction angle of the reflected light from the recording medium in the diffracting element is changed, and thus, on the photodetector, the focal point of the diffracted light from the diffracting element is shifted forward or backward of the photodetector and the focusing spot thereof is spread. Taking into account variations of the diffraction angle and the resulting shape of spread of the flux of light on the photodetector, the division lines of the photodetector are always set such that the amount of light in the photodetecting portions on both sides of the division lines become substantially equal, and accordingly a false focus error signal is prevented to thereby avoid malfunctions of the apparatus.

Example 1

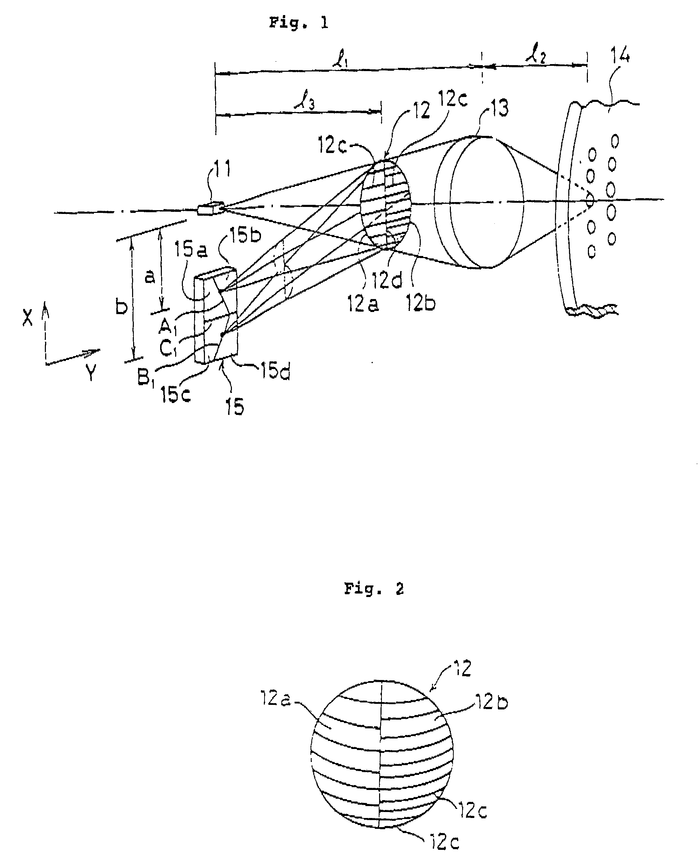

Figure 1 shows an optical information-reproducing apparatus of this invention, which comprises a semiconductor laser 11 that is a light-emitting means for emitting a laser beam, an convergent lens 13 that constitutes an optical system for focusing light from the semiconductor laser 11 via a diffracting element 12 on a disc 14, a recording medium, a diffracting element 12 that diffracts the light reflected from the disc 14 outside of an optical axis of the reflected light, and a photodetector 15 that converts the light from the diffracting element 12 into an electrical signal. In this optical information-reproducing apparatus, from output signals Sa, Sb, Sc, and Sd from each photodetecting portion 15a, 15b, 15c, and 15d of the photodetector 15, the equation FES = (Sa + Sb) - (Sc + Sb) is calculated to obtain a focus error signal FES, on the basis of which the convergent lens 13 is driven so as to focus the light emitted from the semiconductor laser 11 on the disc 14. Moreover, in response to outputs of each photodetecting portion 15a, 15b, 15c and 15d of the photodetector 15, information recorded on the tracking servo and disc 14 are reproduced.

The diffracting element 12 is formed generally into a circular shape and equally divided into two semicircular regions 12a and 12b by a division line 12d in the direction of X-axis. The regions 12a and 12b include a number of grids 12c, and a grid pitch of one region 12b is narrower than that of the other region 12a, so that the diffraction angle of the region 12b becomes larger than that of the region 12a, diffracted light from which is focused on a division line $A_1$ of the photodetector 15, and diffracted light from the region 12b is focused on a division line $B_1$. Although the shape of grids 12c in the regions 12a and 12b of the diffracting element 12 can be linear as shown in Figure 1, it is preferable that, as shown in Figure 2, the shape is curved to eliminate aberrations and portions on the side in a negative direction -X in the regions 12a and 12b are so formed that grid pitches become gradually smaller than those on the opposite side.

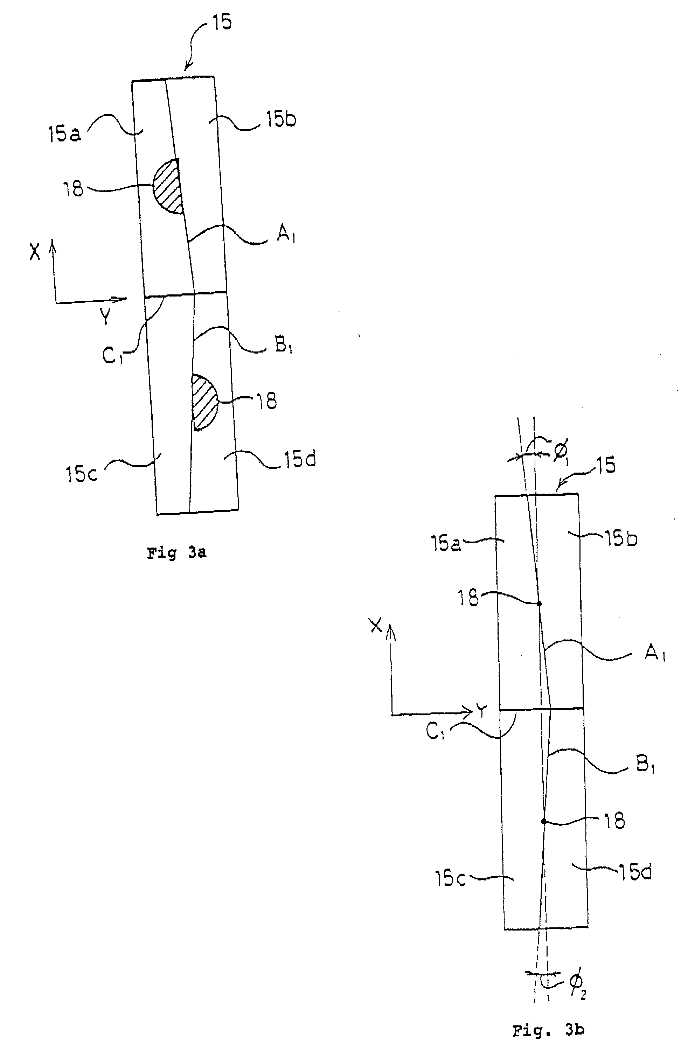

As shown in Figure 3b, the photodetector 15 is formed in a square and having four divided photodetecting portions 15a, 15b, 15c, and 15d. The photodetector 15 is equally divided into photodetecting portions 15a & 15b and 15c & 15d by a division line $C_1$ in the direction of the Y-axis which is orthogonal to the direction of the diffraction of the diffracting element 12, and further divided into the photodetecting portions 15a and 15b as well as into 15c and 15d respectively by two division lines $A_1$ and $B_1$ which are inclined with respect to the X-axis which is the diffracting direction of the diffracting element 12. Division lines $A_1$ and $B_1$ are inclined substantially in a linear symmetrical direction with respect to the division line $C_1$ as an axis of summary such that the amount of light on both sides of the division lines $A_1$ and $B_1$ becomes equal to each other when the diffracted light from the diffracting element 12 is incident upon the photodetector 15. The inclination angles of the division lines $A_1$ and $B_1$ are set respectively at $\varphi_1$ and $\varphi_2$ with respect to the X-axis. The inclination angles $\varphi_1$ and $\varphi_2$ are set by taking into account both the variation of the diffraction angle of the diffracting element 2 with the change of the wavelength of light emitted from the semiconductor laser 11, and the shape of spread of a focusing spot 18 on the photodetector 15 resulted therefrom.

Light emitted from the semiconductor laser 11 (Fig. 2) passes through the diffracting element 12 and is focused on the disc 14 by the convergent lens 13. The reflected light from the disc 14 is returned to the optical system by the convergent lens 13 and diffracted by the regions 12a and 12b of the diffracting element 12. The lights diffracted by the region 12a is focused on the division line $A_1$ of the photodetector 15. The light diffracted by the region 12b is focused on the division line $B_1$.

When light emitted from the semiconductor laser 11 is focused precisely on the disc 14 by the convergent lens 13 or at a correct focus, as shown in Figure 3b, each focusing spot 18 is formed at one point on the division lines $A_1$ and $B_1$, and outputs of the photodetecting portions 15a and 15b as well as those of the photodetecting portions 15c and 15d become equal.

If for some reason the disc 14 is at a distance less than the focal length of the convergent lens 13, the diffracted light is focused behind the photodetector 15 and, as shown in Figure 3a, focusing spots 18 will spread in a semicircular pattern on the photodetecting portions 15a and 15d, respectively. At this time, the equation FES = (Sa + Sd) - (Sc + Sb) is calculated by a focus control means to obtain a focus error signal FES. In response to this signal, the convergent lens 13 (Fig. 1) is moved away from the disc 14 so that light can be focused on the disc 14, whereby signals from the disc 14 can be read properly.

When the disc 14 moves too far from the convergent lens 13, the diffracted light is focused in front of the photodetector 15 and, as shown in Figure 3c, each focusing spot 18 will spread in a semicircular pattern on the photodetecting portions 15b and 15c. In response to the focus error signal FES, the convergent lens 13 is so driven as to approach disc 14 to form the correct light focus thereon.

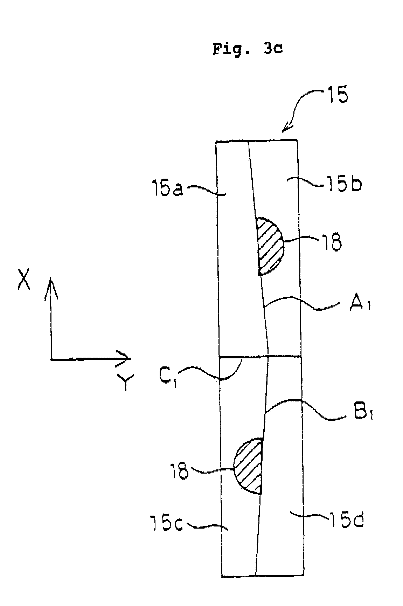

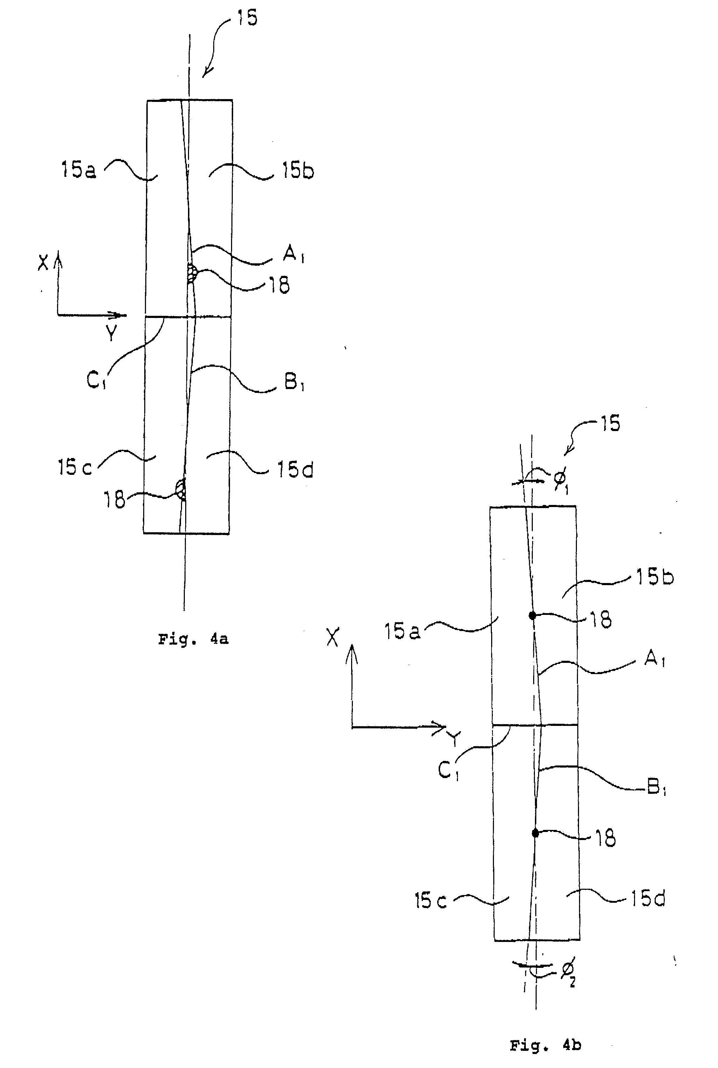

Now, when the emitted light is focused on the disc 14, as shown in Figure 4b, each focusing spot 18 is focused at one point on the division lines $A_1$ and $B_1$ on the photodetector 15. The light wavelength at this time is represented as the standard wavelength $\lambda_0$.

When ambient temperature at which the semiconductor laser 11 is disposed rises and the wavelength $\lambda$ becomes larger than $\lambda_0$ (i.e., $\lambda > \lambda_0$), the light diffraction angle of the diffracting element 12 becomes larger and the diffracted light is focused slightly in front of the photodetector 15. Thereby, as shown in Figure 4a, the focusing spots 18 of diffracted light from regions 12a and 12b of the diffracting element 12, respectively, move in the direction of the diffraction of the diffracted light (i.e., negatively along the X-axis) and at the same time, spread in a semicircular shape on the photodetecting portions 15b and 15c, respectively. However, since the division lines $A_1$ and $B_1$ of the photodetector 15 have inclination angles of $\varphi_1$ and $\varphi_2$ respectively, outputs of the photodetecting portions 15a and 15b become equal to those of the photodetecting portions 15c and 15d. Thus, the focus error signal FES becomes zero and a malfunctions of the driving mechanism of the convergent lens 13 are prevented.

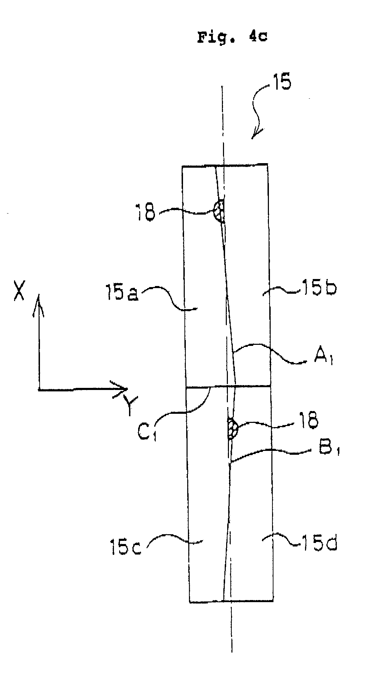

When the ambient temperature at which the semiconductor laser 11 is disposed decreases and the light wavelength $\lambda$ becomes smaller than $\lambda_0$ (i.e., $\lambda < \lambda_0$), the light diffraction angle of the diffracting element 12 becomes smaller and the diffracted light is focused slightly behind the photodetector 15. Thereby, as shown in Figure 4c, the focusing spots 18 of the diffracted light from regions 12a and 12b of the diffracting element 12 move in the direction of the diffraction of the diffracted light or positively along the X-axis, and at the same time, spread in a semicircular shape on the photodetecting portions 15a and 15d. Even in such a case, equal to that aforementioned, outputs of the photodetecting portions 15a and 15b as well as those of the photodetecting portions 15c and 15d become equal, thereby the focus error signal FES becomes zero and a malfunction of the driving mechanism of the convergent lens 13 can be prevented.

Next, a function for suppressing the malfunction of the optical information-reproducing apparatus described hereinabove will be explained by means of a specific example.

In Figures 1 and 3, when the diffracting element 12 is designed at $\ell_1 = 17.0$ mm, $\ell_2 = 4.5$ mm, $\ell_3 = 4$ mm, a = 1.4 mm, b = 1.6 mm and the wavelength of a light source, $\lambda_0 = 780$ nm, if $\varphi_1 = \varphi_2 = 0$ mrad and when the actual wavelength $\lambda$ which changes with ambient temperature becomes 770 nm (i.e., $\lambda = 770$ nm), the offset of the focus error signal FES becomes -0.1 μm. When $\lambda = 790$ nm, the offset thereof becomes +0.1 μm. However, by setting the inclination angle of the division lines $A_1$ and $B_1$, respectively, at $\varphi_1 = 7.633$ mrad and $\varphi_2 = 6.838$ mrad, even when the wavelength $\lambda$ has changed within the range of 770 to 790 nm, the offset of the focus error signal FES can be suppressed below -0.001 μm.

Example 2

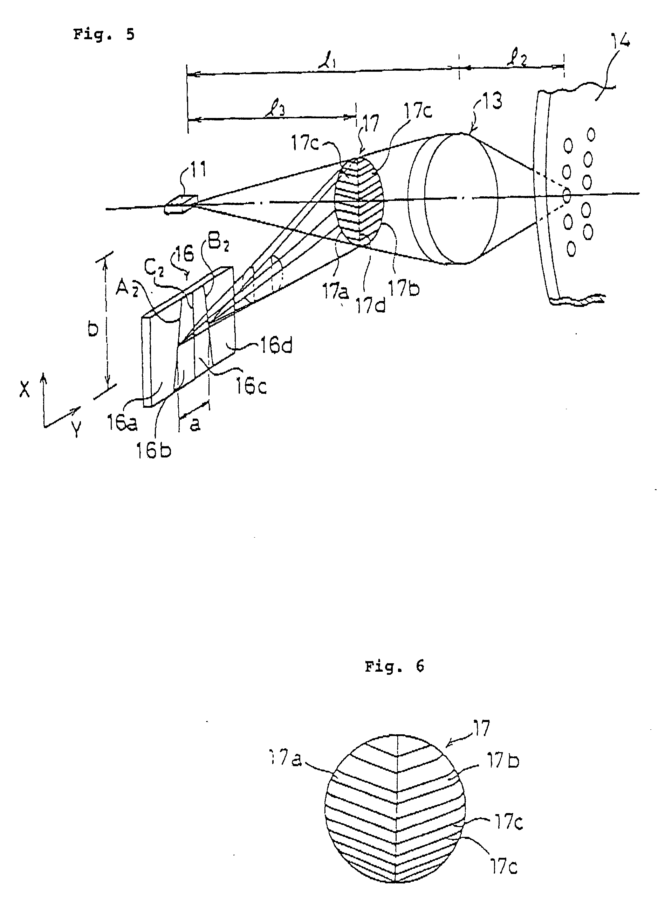

Figure 5 shows another optical information-reproducing apparatus of this invention, which has the same structure as that of Example 1, except that the photodetector 16 is provided with photodetecting portions 16a, 16b, 16c and 16d lined up in parallel in one direction on the same plane, and a diffracting element 17 is also in correspondence thereto.

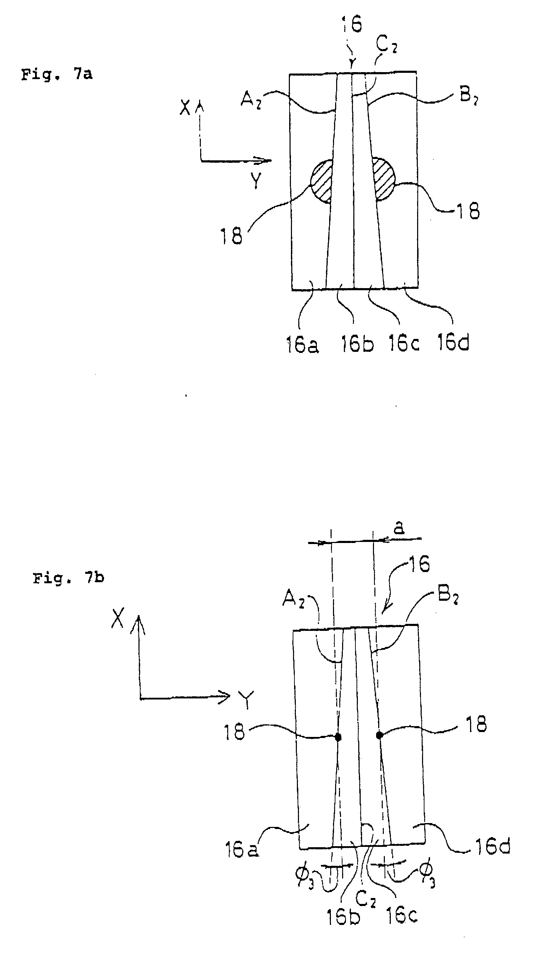

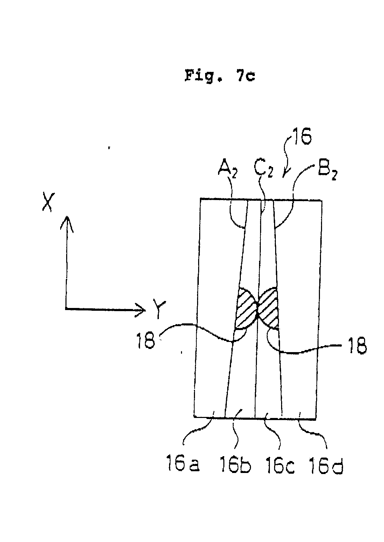

The photodetector 16 is equally divided into photodetecting portions 16a and 16b and 16c and 16d by a division line $C_2$ in the direction of the X-axis which is the direction of the diffraction of the diffracting element 17, and divided respectively into photodetecting portions 16a and 16b as well as the photodetecting portions 16c and 16d by division lines $A_2$ and $B_2$ which are inclined with respect to the X-axis. As shown in Figure 7b, the division lines $A_2$ and $B_2$ are in a linear symmetrical relation with respect to the division line $C_2$ as an axis of symmetry, and inclined respectively by $\varphi_3$ with respect to the X-axis such that the distance between division lines $A_2$ and $B_2$ becomes narrower on the side close to the semiconductor laser 11. When the diffracted light from the diffracting element 17 is incident upon the photodetector 16, the amount of light on both outer sides of the division line $A_2$ and $B_2$ becomes equal.

The diffracting element 17 is equally divided into regions 17a and 17b by a division line 17d in the direction of the X-axis, and grids 17c formed in the regions 17a and 17b are inclined at a prescribed angle with respect to the Y-axis and in a linear symmetrical relation with respect to the division line 17d as an axis of symmetry. Thereby, the diffracted light from the region 17a is focused on the division line $A_2$ of the photodetector 16 and that from the region 17b is focused on division line $B_2$. Although the shape of the grids 17c in regions 17a and 17b of the diffracting element 17 can be linear as shown in Figure 5, it is preferable that, as shown in Figure 6, the shape is curved to eliminate aberrations and portions on the side in a negative direction -X of the regions 17a and 17b are formed so that the grid pitches become gradually smaller than those on the opposite side.

In the above-mentioned configuration, the principle of the focus detecting mechanism in this example is the same as that in the configuration shown in Figure 1.

Light reflected from the disc 14 is diffracted outside of the optical axis of the reflected light by the regions 17a and 17b of the diffracting element 17. The reflected light diffracted by the region 17a is focused on the division line $A_2$ of the photodetector 15 and that diffracted by the region 17b is focussed on the division line $B_2$.

When light emitted from the semiconductor laser 11 is focused precisely on the disc 14, as shown in Figure 7b, each focusing spot 18 is formed at one point on each of the division lines $A_2$ and $B_2$ of the photodetector 17, and outputs of the photodetecting portions 16a and 16b as well as those of the photodetecting portions 16c and 16d become equal.

When the disc 14 is at a distance less than the focal length of the convergent lens 13, it becomes as same as the state shown in Figure 7a. When the disc 14 is at a distance that is greater than the focal length of the convergent lens 13, it becomes the same as the state shown in Figure 7c. In such a case, in response to a focus error signal FES obtained from the equation FES = (Sa + Sd) - (Sc + Sb), the convergent lens 13 is so driven as to correctly focus on the disc 14.

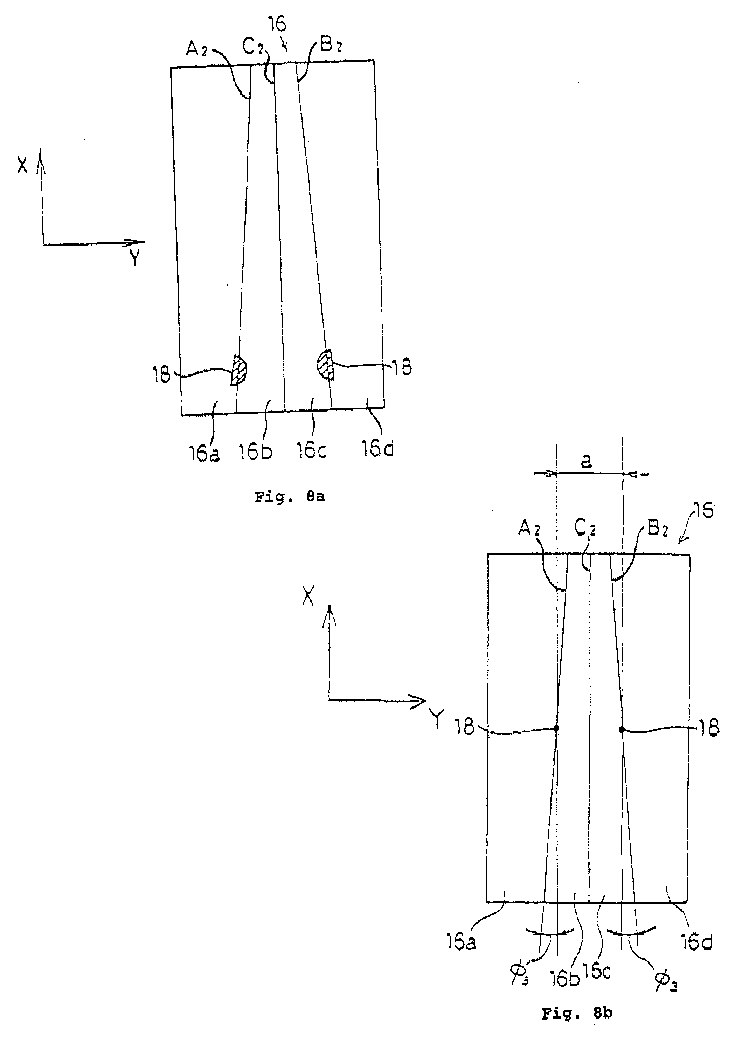

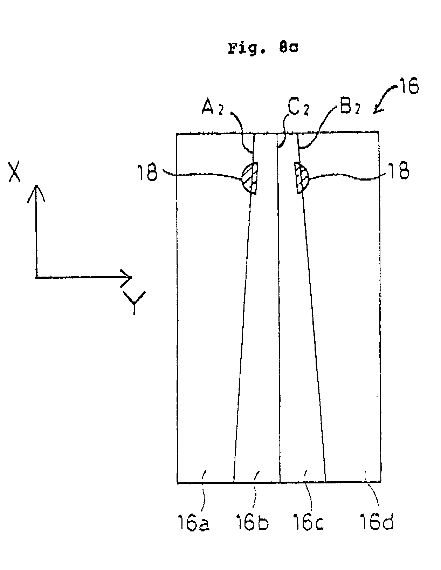

When the ambient temperature at which the semiconductor laser 11 is disposed rises and the wavelength $\lambda$ of light becomes larger than $\lambda_0$ (i.e., $\lambda > \lambda_0$), contrary to the state where each focusing spot 18 is formed at one point on each of the division lines $A_2$ and $B_2$ of the photodetector 17 as shown in Figure 8b, as shown in Figure 8a, the focusing spots 18 are moved negatively along the X-axis. On the contrary, when ambient temperature at which the semiconductor laser 11 is disposed decreases and the light wavelength $\lambda$ becomes smaller than $\lambda_0$ (i.e., $\lambda < \lambda$), as shown in Figure 8c, the focusing spots 18 move positively along the X-axis. In such a case, since the division lines $A_2$ and $B_2$ of the photodetector 16 have an inclination angle of $\varphi_3$ respectively, the amount of light on both sides of the division lines $A_2$ and $B_2$ becomes equal, and outputs of the photodetecting portions 16a and 16b as well as those of the photodetecting portions 16c and 16d become equal. Thus, false focus error signal FES can be suppressed.

Next, a function for suppressing malfunctions of the aforesaid optical information-reproducing apparatus will be explained by means of a specific example.

In Figures 5 and 7, when the diffracting element 17 is designed at $\ell_1 = 17.0$ mm, $\ell_2 = 4.5$ mm, $\ell_3 = 4$ mm, a = 50 $\mu$m, b = 1.5 mm and the wavelength of a light source, $\lambda_0 = 780$ nm, and the inclination angle $\varphi_3$ of the division lines $A_2$ and $B_2$ with respect to the direction of the diffraction of the diffracting element 17 is 0 mrad (i.e., $\varphi_3 = 0$ mrad), if $\lambda = 770$ nm, an offset of the focus error signal FES becomes -0.11 $\mu$m. When $\lambda = 790$ nm, the offset thereof becomes +0.11 $\mu$m. However, by setting the $\varphi_3$ at 9.44 mrad, the offset of the focus error signal FES is suppressed below -0.0001 $\mu$m even when the wavelength $\lambda$ has changed in the range of 770 to 790 nm.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. An optical information-reproducing apparatus comprising a light emitting means, and an optical system that focuses light emitted from the light emitting means on a recording medium and that detects the reflected light from said recording medium to supply to a diffracting element, said diffracting element being disposed on an optical axis of the reflected light from said recording medium and having two or more separate regions to diffract the reflected light onto the corresponding division lines of a photodetector, and said photodetector including a plurality of photodetecting portions divided by said division lines, and converting the diffracted light from said diffracting element focused on said division lines into an electrical signal by said photodetecting portions on both sides of said division lines, wherein said photodetector is so constructed that division lines on which diffracted light from said diffracting element is focused are inclined with respect to the direction of the diffraction of the reflected light from said diffracting element such that the amount of focusing spot light received by the photodetecting portions on both sides of said division lines become substantially equal.

2. An optical information-reproducing apparatus according to claim 1, wherein said photodetector is divided into a plurality of photodetecting portions by a division line that is orthogonal to the direction of the diffraction of said diffracting element and by division lines that are inclined with respect to the direction of the diffraction of said diffracting element.

3. An optical information-reproducing apparatus according to claim 1, wherein said photodetector is divided into a plurality of photodetecting portions by said division lines such that said photodetecting portions are disposed in parallel in one direction on the same plane.

EP 0 311 463 A2

Fig. 1

Fig. 2

Fig 3a

Fig. 3b

**Fig. 3c**

Fig. 4a

Fig. 4b

Fig. 4c

Fig. 5

Fig. 6

Fig. 7a

Fig. 7b

**Fig. 7c**

Fig. 8a

Fig. 8b

Fig. 8c

Fig. 9

5

5a          5b

A

6

X

Y          C

B

6

5c          5d

Fig. 10a

5

5a          5b

A

6

X

Y          C

B

6

5c          5d

Fig. 10b

Fig. 10c

Fig. 11a

Fig. 11b

Fig. 11c